(19) Europäisches Patentamt
European Patent Office
Office européen des brevets

(11) **EP 3 779 799 A1**

(12) **EUROPEAN PATENT APPLICATION**

(43) Date of publication:
**17.02.2021 Bulletin 2021/07**

(51) Int Cl.:
**G06N 3/04** (2006.01)  **G06N 3/08** (2006.01)
**G06N 5/04** (2006.01)  **G06N 5/02** (2006.01)

(21) Application number: **19191652.7**

(22) Date of filing: **14.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Zafar, Muhammad Bilal**
**71272 Renningen (DE)**

Remarks:
Amended claims in accordance with Rule 137(2) EPC.

(54) **METHOD AND SYSTEM FOR RELIABLE CLASSIFICATION USING A NEURAL NETWORK**

(57) According to various embodiments, a method and a system for classification are described comprising the storing, for each object class of a plurality of object classes, of one or more attributes associated with the object class, wherein each attribute describes a feature of at least one object class of the plurality of object classes, determining, for input sensor data, an object class prediction for an object class in the input sensor data together with one or more attribute predictions using a neural network, determining whether or not the one or more attribute predictions correspond to the one or more attributes associated with the predicted object class; and controlling further processing of the class prediction based on the determination.

Fig. 5

EP 3 779 799 A1

**Description**

The present disclosure relates to methods and systems for classification using neural networks.

Neural networks, e.g. Convolutional Neural Networks, CNNs, are becoming more and more widely used to classify data, e.g. images into a pre-defined number of classes. Understanding how the neural network has reached its results can greatly help in determining how trustworthy the classification is, but is alas notoriously difficult.

Methods such as the ones described in "Why Should I Trust You?: Explaining the Predictions of Any Classifier" by Ribeiro et al, KDD, 2016 or "Deep Inside Convolutional Networks: Visualising Image Classification and Saliency Maps", ICLR, 2014, have been proposed to try to explain the results provided by a neural network in a post-hoc manner, i.e. after the neural network has been trained to classify input data into different classes. While some prior methods such as "Textual Explanations for Self-Driving Vehicles" by Kim et al, ECCV 2018 aim at adding the explanation generation to the training of the neural network, they focus on regression problems as opposed to classification problems.

In view of the above, information (explanations) about how a neural network obtained output results, i.e. class predictions, as opposed to explaining the class predictions in a post-hoc manner, is desirable.

Furthermore, an indication of confidence in the reliability of the class predictions is desirable.

While methods like "Textual Explanations for Self-Driving Vehicles" provide explanations for the decisions, they do not provide a way to automatically convert these explanations into reliability estimates for the class predictions. On the other hand, Bayesian methods do provide reliability estimates in the form of predictive variance, e.g. as in "Dropout as a Bayesian Approximation: Representing Model Uncertainty in Deep Learning" by Gal and Ghahramani, ICML, 2016. However, these variance-based reliability estimates are not easily explainable. That is, they do not provide explanations of the kind: the input belongs to class A because it has the property X. Interpretable reliability measures can help increase the trust of the end-users in a prediction system.

The method and the device for classifying input sensor data with the features of the independent claims 1 (first example) and 17 (seventeenth example) allow providing ad-hoc explanations, in the form of attribute predictions associated to each object class prediction for the output results of a neural network. The further processing of an object class prediction can then be controlled based on whether or not the one or more attribute predictions correspond to a stored association between the object class and the attributes. The method of independent claim 20 (twenty-second example) provides a method to train a neural network with attribute predictions associated to each object class prediction.

The method for classifying input sensor data, the corresponding classification system and the method for training a neural network allow receiving information (explanations received with the classification) about how the neural network obtained the classification/output results. This information helps in determining whether or not the classification, i.e. the class predictions are reliable. If the predicted class label does not correspond to the predicted attributes, the prediction is considered to be unreliable and may be e.g. marked or rejected. Optionally, the method can also provide a degree of reliability e.g. 30%, 90%. The degree of reliability is determined based on the degree of overlap between the predicted attribute labels and the ground-truth attribute labels of the predicted class.

Further examples are described in the following:

A method for classifying input sensor data using a neural network, may include storing, for each object class of a plurality of object classes, one or more attributes associated with the object class, wherein each attribute describes a feature of at least one object class of the plurality of object classes, determining, for input sensor data, an object class prediction for an object class in the input sensor data together with one or more attribute predictions using the neural network, determining whether or not the one or more attribute predictions correspond to the one or more attributes associated with the predicted object class, and controlling further processing of the object class prediction based on whether or not the one or more attribute predictions correspond to the one or more attributes associated with the predicted object class. The method mentioned in this paragraph provides a first example.

The method may include that controlling the further processing includes triggering the storing of an indication of whether or not the one or more attribute predictions correspond to the one or more attributes associated with the predicted object class in a memory. The features mentioned in this paragraph in combination with the first example provide a second example.

The method may include that controlling the further processing includes storing at least one of the attribute predictions, the object class prediction and the input sensor data. The features mentioned in this paragraph in combination with the first or second example provides a third example.

The method may include that controlling the further processing includes accepting or discarding the object class prediction based on whether or not the one or more attribute predictions correspond to the one or more attributes associated with the predicted object class. The features mentioned in this paragraph in combination with any one of the first example to third example provide a fourth example.

The method may include that controlling the further processing includes operating an actuator in a device based on whether or not the one or more attribute predictions correspond to the one or more attributes associated with the predicted object class. The features mentioned in this paragraph in combination with any one of the first example to fourth example provide a fifth example.

The method may include that controlling the further processing includes requesting human intervention if the one or more attribute predictions do not correspond to the one or more attributes associated with the predicted object class. The features mentioned in this paragraph in combination with any one of the first example to fifth example provide a sixth example.

The method may include that determining whether or not the one or more attribute predictions correspond to the one or more attributes associated with the predicted object class comprises determining the stored attributes associated with the predicted object class and comparing the determined stored attributes with the attribute predictions. The features mentioned in this paragraph in combination with any one of the first example to sixth example provide a seventh example.

The method may include that the neural network is a neural network trained for the classification of objects into the plurality of object classes. The features mentioned in this paragraph in combination with any one of the first example to seventh example provide an eighth example.

The method may include that determining the object class prediction comprises supplying the input sensor data to the neural network. The features mentioned in this paragraph in combination with any one of the first example to eighth example provide a ninth example.

The method may include that the input sensor data is input image data. The features mentioned in this paragraph in combination with any one of the first example to ninth example provide a tenth example

The method may include that that an image of the input image data includes at least one object associated to an object class. The features mentioned in this paragraph in combination with the tenth example provide an eleventh example.

The method may include that each attribute describes a peculiarity that objects from the object class have. The features mentioned in this paragraph in combination with any one of the first example to eleventh example provide a twelfth example.

The method may include that each attribute describes a characteristic property that objects from the object class have. The features mentioned in this paragraph in combination with any one of the first example to twelfth example provide a thirteenth example.

The method may include that each object class has a unique combination of attributes associated to it. The features mentioned in this paragraph in combination with any one of the first example to thirteenth example provide a fourteenth example.

The method may include that the attribute labels are derived from a knowledge base or from an ontology (for example, YAGO, Freebase) or/and from annotations from domain experts. The features mentioned in this paragraph in combination with any one of the first example to fourteenth example provide a fifteenth example.

The method may include that the neural network is a deep feed forward neural network and/or a convolutional network and/or a recurrent neural network and/or an attention-based neural network. The features mentioned in this paragraph in combination with any one of the first example to fifteenth example provide a sixteenth example.

A classification system may be configured to perform a method of any one of the first example to sixteenth example. The system mentioned in this paragraph provides a seventeenth example.

The classification system may include that at least a portion of the classification system is implemented by one or more processors. The features mentioned in this paragraph in combination with the seventeenth example provide an eighteenth example.

The classification system may include a receiver configured to receive sensor data from at least one sensor, in particular from an image sensor. The features mentioned in this paragraph in combination with any one of the seventeenth example to eighteenth example provide a nineteenth example.

An autonomous driving system for object detection may include a classification system of any one of the seventeenth to nineteenth example. The features mentioned in this paragraph provide a twentieth example.

An assembly line arrangement may include a classification system of any one of the seventeenth to nineteenth example. The features mentioned in this paragraph provide a twenty-first example.

A method for training a neural network may include providing training sensor data set units of a training dataset each with a ground-truth object class label and with one or more ground-truth attribute labels, wherein each object class label is associated with at least one of the attribute labels, and wherein an attribute specified by an attribute label describes a feature of the object class specified by the object class label associated with the attribute label, training the neural network by predicting, for each training sensor data set unit of the training dataset, an object class prediction and one or more attribute predictions, comparing the ground-truth object class label and the one or more ground-truth attribute labels for the training sensor data set unit of the training dataset to the object class prediction and one or more attribute predictions, and adjusting the neural network based on the discrepancy between the object class prediction and the ground-truth object class label jointly with the discrepancy between the one or more attribute predictions and the one or more ground-truth attribute labels. The method mentioned in this paragraph provides a twenty-second example.

The training method may include that adjusting the neural network comprises penalizing the neural network in case the attribute predictions do not match the ground-truth attribute labels associated to the object class. The features mentioned in this paragraph in combination with the twenty-second example provide a twenty-third example.

The training method may include that determining the discrepancy between the object class prediction and the ground-truth object class label jointly with the discrepancy between the one or more attribute predictions and the one or more ground-truth attribute labels is based on a loss function. The features mentioned in this paragraph in combination with any one of the twenty-second example to twenty-third example provide a twenty-fourth example.

The training method may include that the loss function is a combination of a cross-entropy loss function for the object class predictions and one or more cross entropy loss functions for the attribute predictions, wherein each attribute prediction has an associated cross-entropy loss function. The features mentioned in this paragraph in combination with any one of the twenty-second example to twenty-fourth example provide a twenty-fifth example.

The training method may include that the loss function is a weighted sum of the cross-entropy loss function for the object class predictions and of the cross-entropy loss functions for the attribute predictions. The features mentioned in this paragraph in combination with any one of the twenty-second example to twenty-fifth example provide a twenty-sixth example.

The training method may include generating the training dataset by receiving sensor data labelled with ground-truth object class labels from a database. The features mentioned in this paragraph in combination with any one of the twenty-second example to twenty-sixth example provide a twenty-seventh example.

The training method may include generating the training dataset by deriving ground-truth attribute labels from a knowledge base or from an ontology or/and from annotations from domain experts. The features mentioned in this paragraph in combination with any one of the twenty-second example to twenty-seventh example provide a twenty-eighth example.

The training method may include that determining the object class prediction comprises supplying input sensor data to the neural network. The features mentioned in this paragraph in combination with any one of the twenty-second example to twenty-eighth example provide a twenty-ninth example.

The training method may include that the input sensor data is input image data. The features mentioned in this paragraph in combination with the twenty-ninth example a thirtieth example.

The training method may include that each image of the input image data includes at least one object associated to an object class. The features mentioned in this paragraph in combination with any one of the twenty-second example to thirtieth example provide a thirty-first example.

The training method may include that each attribute describes a peculiarity that objects from the object class have. The features mentioned in this paragraph in combination with any one of the twenty-second example to thirty-first example provide a thirty-second example.

The training method may include that each attribute describes a characteristic property that objects from the object class have. The features mentioned in this paragraph in combination with any one of the twenty-second example to thirty-second example provide a thirty-third example.

The training method may include that the neural network is a deep feed forward neural network and/or a convolutional neural network and/or a recurrent neural network and/or an attention-based neural network. The features mentioned in this paragraph in combination with any one of the twenty-second example to thirty-third example provide a thirty-fourth example.

A vehicle may include at least one sensor providing input sensor data, a driving assistance system comprising a neural network configured to classify the input sensor data according to any one of the first to the sixteenth example, wherein the driving assistance system is configured to control the vehicle based on whether or not the one or more attribute predictions correspond to the one or more attributes associated with the predicted object class. The features mentioned in this paragraph provide a thirty-fifth example.

The vehicle may include that the driving assistance system is configured to operate an actuator in a device based on whether or not the one or more attribute predictions correspond to the one or more attributes associated with the predicted object class. The features mentioned in this paragraph in combination with the thirty-fifth example provide a thirty-sixth example.

The vehicle may include that the actuator actuates the brakes of the vehicle. The features mentioned in this paragraph in combination with any one of the thirty-fifth example to thirty-sixth example provide a thirty-seventh example.

The vehicle may include that the driving assistance system is configured to hand over control of the vehicle to a human driver if the one or more attribute predictions do not correspond to the one or more attributes associated with the predicted object class. The features mentioned in this paragraph in combination with any one of the thirty-fifth example to thirty-sixth example provide a thirty-eighth example.

According to a further example, a neural network device may be provided comprising a memory configured to store for each object class of a plurality of object classes one or more attributes associated with the object class, wherein each attribute describes a feature of at least one object class of the plurality of object classes, a neural network configured to determine, for input image data, an object class prediction for an object class in the input image data together with one or more attribute predictions, and a controller configured to accept or discard the class prediction for further processing based on whether the one or more attribute predictions correspond to the one or more attributes associated with the object class.

A computer program may have program instructions that are configured to, when executed by one or more processors, to make the one or more processors perform the method according to one or more of the first example to seventeenth example and/or the method according to one or more of the twenty-second example to thirty-fourth example.

The computer program may be stored in a machine-readable storage medium.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows an example of object detection in the context of autonomous driving.
Figure 2    shows an exemplary assembly line arrangement for the detection of defective parts.
Figure 3    shows an example of a neural network.
Figure 4    shows an exemplary arrangement for training and using a neural network to classify images.
Figure 5    shows an exemplary arrangement for training and using a neural network to classify images, further providing image object attribute predictions.
Figure 6    shows an example for the labeling of the training and validation data for the arrangement of figure 5.
Figure 7    shows a flow diagram illustrating an exemplary method for classifying input sensor data using a neural network.
Figure 8    shows a flow diagram illustrating an exemplary method for training a neural network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

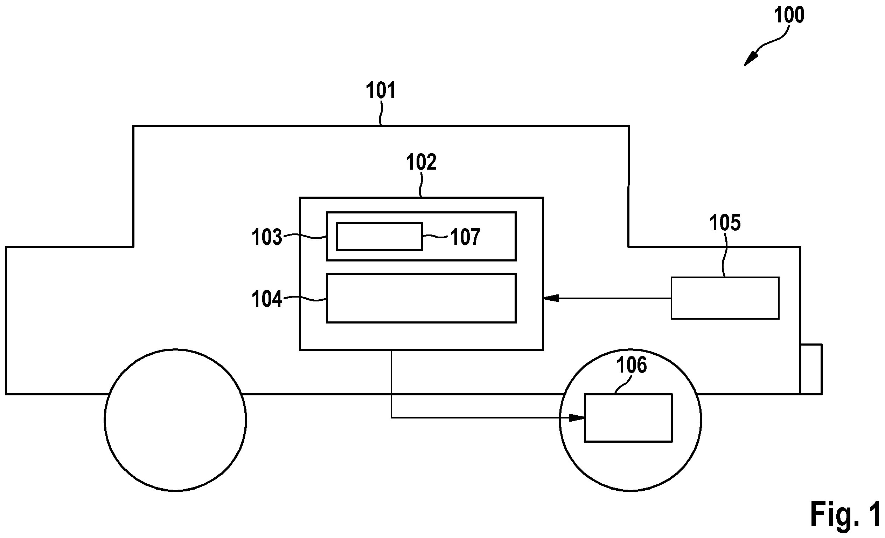

Figure 1 shows an example 100 for object detection in an autonomous driving scenario.

In the example of figure 1, a vehicle 101, for example a car, van or motorcycle is provided with a vehicle controller 102.

The vehicle controller 102 includes data processing components, e.g. a processor (e.g. a CPU (central processing unit)) 103 and a memory 104 for storing control software according to which the vehicle controller 102 operates and data on which the processor 103 operates.

For example, the stored control software comprises instructions that, when executed by the processor 103, make the processor implement a neural network 107.

The data stored in memory 104 can include input sensor data from one or more sensors 105, for example, the one or more sensors 105 may be one or more cameras acquiring images. An image can include a collection of data representing one or more objects or patterns. The one or more sensors (cameras) 105 may for example output greyscale or color pictures of the vehicle's environment. The one or more sensors 105 may be responsive to visible light or non-visible light such as e.g. infrared or ultraviolet light, ultrasonic or radar waves, or other electromagnetic or sonic signals. For example, sensor 105 may output radar sensor data that measures the distance from objects in the front (back) of vehicle 101.

The vehicle controller 102 may determine the presence of objects, e.g. fixed objects, such as traffic signs or road markings, and/or moving objects, such as pedestrians, animals and other vehicles, based on the input sensor data, e.g. image data.

The vehicle 101 may then be controlled by the vehicle controller 102 in accordance with the results of the object determination. For example, the vehicle controller 102 may control an actuator 106 to control the vehicle's speed, e.g. to actuate the brakes of the vehicle.

The vehicle controller 102 may for example give control of vehicle 101 to a human driver in case the results of the object determination of neural network 107 are determined as unreliable.

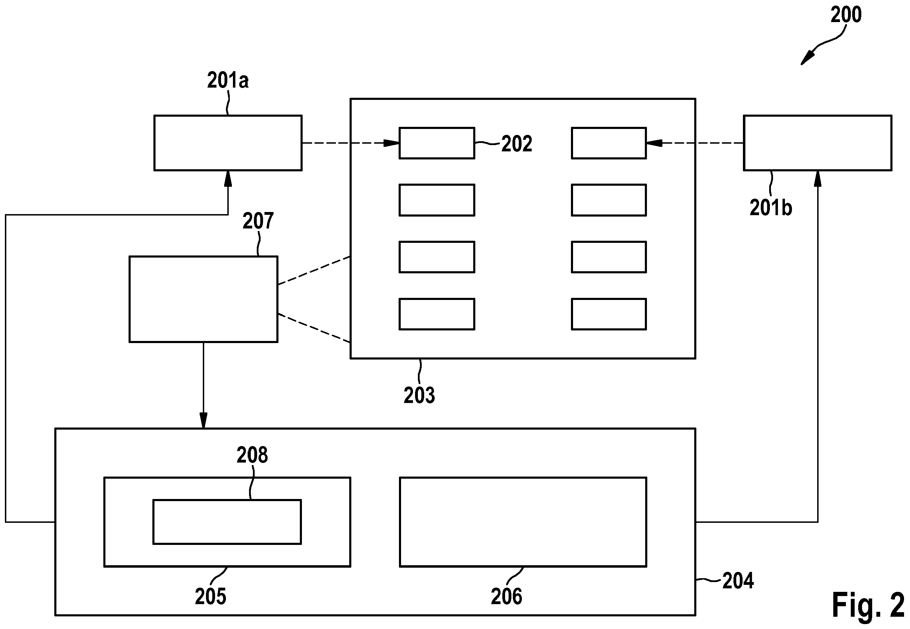

Figure 2 shows an assembly line arrangement 200 illustrating an example for the detection of defective parts.

In the example of figure 2, actuators 201a and 201b can pick up parts 202 positioned on an assembly line 203, and are in communication with an actuator controller 204.

The actuator controller 204 includes data processing components, e.g. a processor (e.g. a CPU (central processing unit)) 205 and a memory 206 for storing control software according to which the actuator controller 204 operates, and data on which the processor 205 operates.

In this example, the stored control software comprises instructions that, when executed by the processor 205, make the processor 205 implement a neural network 208.

The data stored in memory 206 may for example include image data from one or more image sources 207, e.g. cameras. An image can include a collection of data representing one or more objects or patterns. The one or more image sources 207 may for example output one or more greyscale or color pictures of each of the parts 202. The one or more image sources 207 may be responsive to visible light or non-visible light such as e.g. infrared or ultraviolet light, ultrasonic or radar waves, or other electromagnetic or sonic signals.

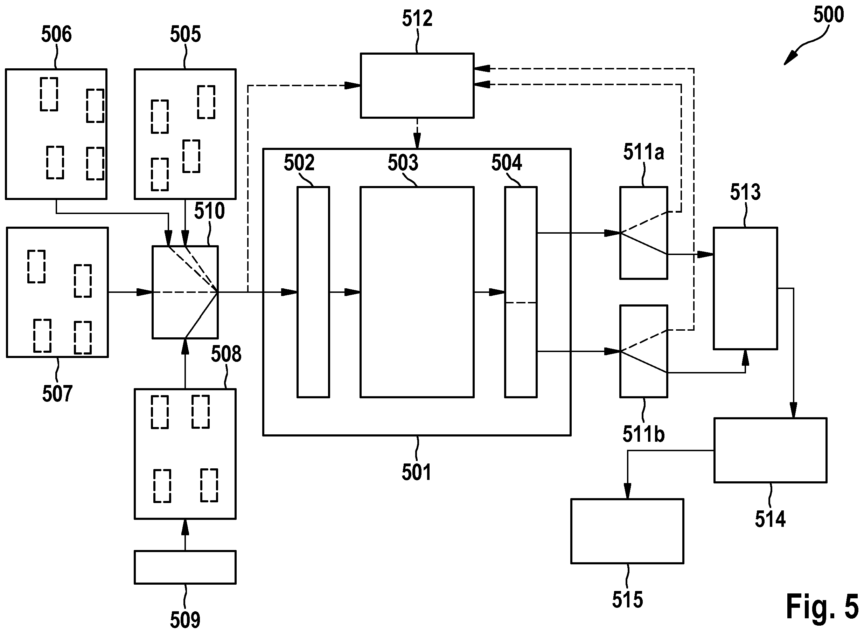

The actuator controller 204 may determine that one of the parts 202 is defective based on the image data from the one or more image sources 207 using a neural network system such as the one illustrated in figure 5.

In case the actuator controller 204 has determined a part to be defective, it may command one of the actuators 201a, 201b to remove the defective part from the assembly line.

A similar system as the one illustrated in figure 2 could be used in other technical fields, e.g. to detect and sort out counterfeit banknotes.

As mentioned in the control examples of figures 1 and 2, the control is performed on the basis of an object classification performed by a neural network.

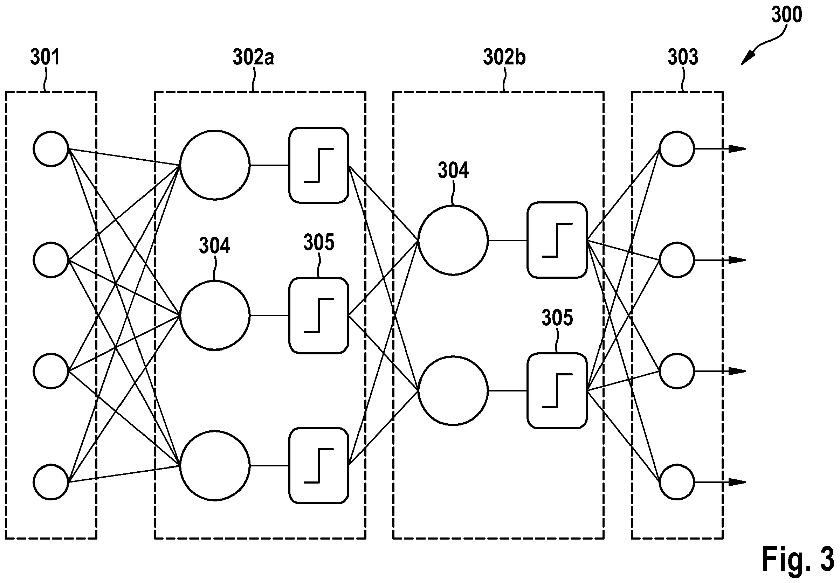

Figure 3 shows an example of a neural network 300 that can be used to classify input sensor data into a pre-defined number of classes.

In this example, the neural network 300 includes one input layer 301, two hidden layers 302a and 302b and one output layer 303.

It should be noted that the neural network 300 is a simplified example of an actual deep neural network, e.g. a deep feed forward neural network, used for classification purposes, which may include many more processing nodes and hidden layers.

The input data corresponds to the input layer 301, and can generally be seen as a multidimensional array of values, e.g. an input image can be seen as a 2-dimensional array of values corresponding to the pixel values of the image.

The inputs from the input layer 301 are then connected to processing nodes 304. A typical node 304 multiplies each input with a weight and sums the weighted values up. Additionally, a node 304 may add a bias to the sum.

The nodes 304 are typically each followed by a non-linear activation function 305, e.g. Rectified Linear Unit, ReLU ($f(x) = \max(0,x)$) or a sigmoid function ($f(x) = 1/(1 + \exp(-x))$). The resulting value is usually input to the next layer.

Hidden layers 302a and 302b may be fully connected layers, as shown in Figure 3, where every node of one layer is connected to every node of another layer.

The hidden layers may also be non-fully connected layers, e.g. convolutional or pooling layers in case of a convolutional neural network, CNN.

In a convolutional layer, the inputs are modified by convolutional filters. These filters operate on a subset of the input data, and may help to extract features of the input data, e.g. a particular shape or pattern. A filter implemented by the convolutional layer causes several corresponding nodes 304 of the convolutional layer to receive inputs from only a portion of the previous layer.

A pooling layer can be seen as a form of non-linear down-sampling, reducing the dimensions of the data by combining the outputs of several nodes into a single node in the next layer, e.g. by taking the maximum value of the outputs.

The hidden layers may also be other types of layers, such as e.g. recurrent layers or self-attention layers.

It should be noted that no matter the underlying architecture of the neural network, e.g. fully connected network, convolutional network or recurrent network, the output layer is usually the same.

In a neural network designed for classification such as neural network 300, the output layer 303 receives values from at least one of the preceding hidden layers, e.g. from hidden layer 302b. These values may then be turned into probabilities by the output layer, e.g. by applying the softmax function $f(x) = \dfrac{\exp(v_i)}{\sum_{k=1}^{K} exp(v_k)}$, where $v_i$, i = 1,...,K, are the values received by the output layer) or the sigmoid function on them. The highest probability value contained in an output vector corresponds to a class prediction. Here, K is the total number of classes.

In the following, class predictions may also be referred to as predictions, predicted class labels or predicted classification labels.

An output vector of output layer 303 is thus a probability vector indicating, for each of the pre-defined classes, the probability that the input sensor data corresponds to the pre-defined class, e.g. that it shows a predefined object. For example, assuming there are 10 pre-defined classes (0, 1,..., 9) for the input image of a digit, the output vector is a vector consisting of 10 elements where each element corresponds to the probability for a digit. The class prediction will be the digit corresponding to the highest probability in the output vector. The output layer 303 may output the entire vector consisting of probability values, or only output the class predictions.

For being able to classify input sensor data, the neural network 300 first needs to be trained accordingly.

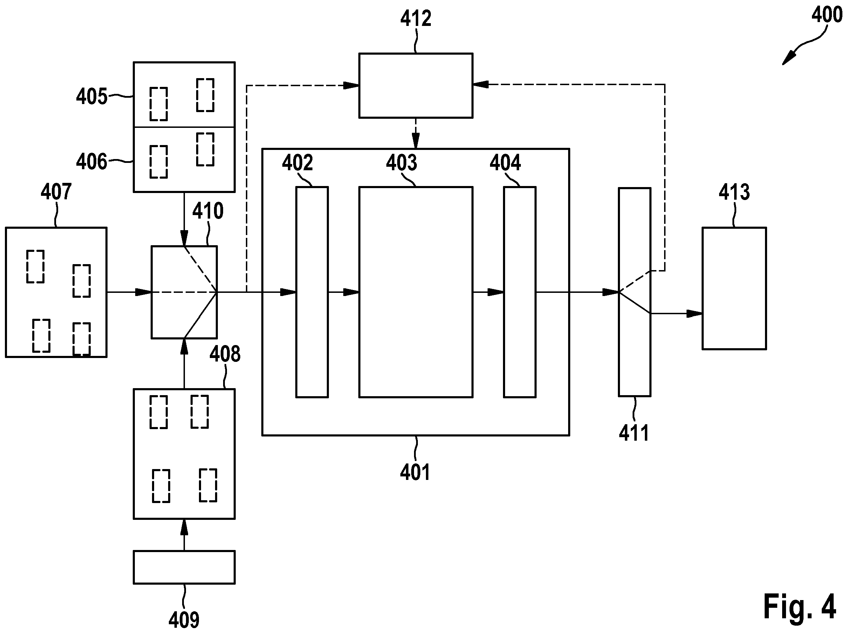

It should be noted that in the following (Figures 4, 5 and 6), the input data of the neural network consists of images, but the shown arrangements can be used to classify other type of input sensor data.

Figure 4 shows an arrangement 400 for training and using a neural network 401 to classify images.

It should be noted that the classification of an image may be regarded to be equivalent to the classification of an object shown in the image. If an original image shows multiple objects or patterns, like in an automotive driving scenario, a segmentation may be performed (possibly by another neural network) such that each segment shows one object or pattern, and the segments are used as input to the image classifying neural network 401.

Furthermore, it should be noted that in case that the input comes from another (already trained) neural network, it is possible to further train and fine-tune this other neural network during the training of neural network 401.

The neural network training arrangement 400 includes a neural network 401, e.g. corresponding to the neural network 300 of figure 3, with an input layer 402, hidden layers 403 and an output layer 404.

The input layer 402 receives input data from either a training dataset 405, a validation dataset 406 or, for image classification when the neural network 401 has been trained, from a test dataset 407 or from an image storage 408.

A selector 410 can be provided to select which input data is provided to the input layer 402.

The training dataset 405 contains images for training purposes as well as additional information assigning each image to at least one class. This information is referred to as class (classification) labels or ground-truth class (classification) labels.

Typically, a part of the training data is separated to form a validation dataset 406.

The validation dataset 406 contains images for training purposes as well as additional information assigning each image to at least one class. The validation dataset 406 is used to check the training progress (e.g. once every iteration, also referred to as an epoch), i.e. measure how well the neural network is currently at classifying objects in the input image data.

Furthermore, the validation dataset 406 can be used to fine-tune the values of so-called hyperparameters, which are parameters determining the network structure (e.g. the number of nodes) or/and how the network is trained, e.g. via a learning rate, which is a rate that determines how fast the neural network updates its parameters (e.g. the weights of the nodes).

The training and validation data are typically referred to as labeled data.

The test dataset 407 also contains images with class labels, but these images, unlike the ones of training dataset 405, are only used to test neural network 401. In case the difference between the ground-truth class labels and the predicted class labels (class predictions) is larger than desired, the neural network has to be trained and tested again.

Once neural network 401 has been successfully trained, it can be used to classify images coming from an image source 409, e.g. a camera, and stored in image storage 408.

An output selector 411 may be provided to receive the outputs from the neural network 401, i.e. receive the predicted class labels, and supply them either to a training controller 412 in case the input data is training or validation data, i.e. in case the neural network 401 is being trained, or for example to a storage 412 when the neural network 401 has been trained and is tested or/and used for classification. The predicted class labels stored in storage 413 may be further processed, e.g. for controlling purposes.

The training controller 412 also receives, for each image of datasets 405 and 406 the ground-truth class labels from the selector 410, and compares them to the predicted class labels.

The goal when training a neural network is to reduce, up to a satisfactory point, the discrepancy between the ground-truth class labels and the predicted class labels. To this end, training controller 412 can use various methods, e.g. backpropagation, to adjust the parameters, that is, the weights and biases of the processing nodes contained in the neural network. For example, the training controller 412 may use the following training methodology:

Let $\mathcal{D} = \left\{ x^{(i)}, y^{(i)} \right\}_{i=1}^{N}$ denote a training dataset with *N* items of labeled data, with images

$$x \in \mathcal{X} = \mathbb{R}^d$$

and class labels

$$y \in \mathcal{Y} = \{1, 2, ..., K\},$$

i.e. the classification task consists of classifying the images into K classes. For simplicity, it is assumed in the following that the classification task is not a multi-label classification task, i.e. that each image belongs to only one class. However, similar training methodologies can be applied to multi-label classification tasks.

The training task involves obtaining a mapping

$$F_{clf} : \mathcal{X} \to \mathcal{Y}$$

between $\mathcal{X}$ and $\mathcal{Y}$. For a neural network with L hidden layers, this mapping consists of applying a set of parametrized layers $f_l(x_l;\theta_l)$. Here, $x_l$ and $\theta_l$ denote, respectively, the input and parameters of the $l^{th}$ hidden layer. The parameters $\theta_l$ of a given layer consist of the set of parameters (e.g., weights and biases) of the individual nodes contained in the layer. For ease of exposition, the parameters are omitted when showing the application of a layer on an input, that is, $f_l(x_l;\theta_l)$ is denoted as $f_l(x_l)$. The entire neural network mapping can be expressed as:

$$F_{clf}(x) = f_{clf}(f_L(f_{L-1}(...f_1(x)))), \tag{1}$$

wherein the output from output layer $f_{clf}$ is a K-dimensional vector consisting of probabilities obtained by applying the softmax function within output layer $f_{clf}$. The class prediction $\hat{y}$ is obtained with $\hat{y} = argmax\, F_{clf}(x)$. Note that the hidden layers do not necessarily need to be stacked in a sequential order, rather, they can also have additional connectivity structure such as residual, dense or skip connections.

The neural network 401 is trained based on minimizing the discrepancy between predicted and ground-truth class labels. This discrepancy can be expressed via a cross-entropy loss function, e.g. via a categorical cross-entropy loss function $\mathcal{L}_{clf}(F_{clf}(x), y)$. A cross-entropy loss function can be regarded as an indication of the mean loss of the predictions on the training data when compared to the ground-truth labels. Using a cross-entropy loss function also has the advantage of computational tractability. In this exemplary training methodology, neural network 401 is therefore trained based on minimizing the categorical cross-entropy loss function.

In each iteration, the training controller 412 updates the parameters of the layers, that is, the weight and bias vectors in neural network 401. This iterative process is repeated until the categorical cross-entropy loss function $\mathcal{L}_{clf}(F_{clf}(x), y)$ has been sufficiently minimized, e.g. when it has been determined using the validation dataset that the accuracy on the validation dataset is above a predetermined threshold. In other words, the iterative process is repeated until the difference between ground-truth and predicted class labels is sufficiently small, e.g. smaller than a predetermined threshold.

Afterwards, the test dataset 407 is selected, and in case the difference between ground-truth and predicted labels is also sufficiently small, e.g. smaller than a predetermined threshold, for data from the test dataset, the training of the neural network 401 can be regarded as successfully completed. The neural network 401 can then be used as an image (or object) classifier.

However, an image classifying system such as the one described in Figure 4 does not provide any clue or explanation as to why the system has outputted a specific prediction, i.e. why the system has determined that an image belongs to a specific class, or specific classes.

This is due to the inherent high complexity of deep neural networks, with hidden layers and a large number of processing nodes, whose operation is opaque to a human observer.

Figure 5 shows an arrangement 500 for training and using a neural network 501 to classify images, which provides, by design, more information about the class predictions, which can be seen as information about how the neural network obtained output results and may be used as an indication of confidence in the reliability of class predictions.

The neural network training arrangement 500 includes a neural network 501, e.g. corresponding to the neural network 300 of figure 3, with an input layer 502, hidden layers 503 and an output layer 504.

The input layer 502 receives input data from either a training dataset 505, a validation dataset 506, or, for image classification when the neural network 501 has been trained, from a test dataset 507 or an image storage 508.

A selector 510 can be provided to select which input data is provided to the input layer 502.

The training dataset 505 and the validation dataset 506 contain images with associated ground-truth class labels and ground-truth attribute labels. Alternatively, training dataset 505 and validation dataset 506 contain images with associated ground-truth class labels and an association (mapping) between the ground-truth class labels and (corresponding) ground-truth attribute labels. The association (mapping) between class labels and attribute labels can be saved in a storage (not shown in Figure 5).

The ground-truth attribute labels are labels that are associated to each class label, and that represent features, peculiarities or characteristic properties of the objects carrying the class label.

It should be noted that the attribute labels for images contained in the training and/or validation dataset may in particular be chosen in such a way that the corresponding peculiarities will frequently be present in an image of an object carrying the class label to which they are associated. The features, peculiarities or characteristic properties represented by the attribute labels may correspond to the physical appearance of objects represented in the images.

Furthermore, the attribute labels may also be seen as reasoning labels, which reflect the reasoning based on which the neural network has classified an object into a certain object class. It should be noted that the reasoning or attributes labels need not be visible in the image.

For example, the class label {pedestrian} can be associated with attribute labels such as {legs, arms, head} and the class label {vehicle} can be associated with attribute labels such as {wheels, windows, lights}.

The test dataset 507 contains images for testing how well the neural network classifies input image data. The images contained in test dataset 507 are provided with the association (mapping) between class labels and attribute labels.

The neural network 501 is trained with both class and attribute labels. Once the neural network has been successfully trained, it can classify images coming from at least one image source 509, e.g. a camera or other image sensors, and stored in image storage 508.

A selector 510 can be provided to select which input data is provided to input layer 502.

At the other end of the neural network 501, the output layer 504 outputs both class and attribute predictions.

It should be noted that the attribute predictions may be provided by a binary vector (denoted as predicted attribute label vector), wherein each attribute corresponds to one bit which may have a value of 1 (attribute predicted to be present) or 0 (attribute predicted not to be present). It is thus possible that the entire vector indicating the presence of the attributes is a zero vector, which can be seen as equivalent to the neural network not predicting any attributes for a class. In that case, the attribute prediction is that the object does not have any of the one or more attributes. In such a case, the class prediction may be considered to be unreliable and may for example be marked as requiring later analysis (e.g. the input has to be manually inspected by a human/expert) or discarded.

A class output selector 511a receives the predicted class labels from output layer 504, and an attribute output selector 511b receives the predicted attribute labels from output layer 504. Alternatively, attribute output selector 511b receives the mapping between ground-truth class labels and ground-truth attribute labels from output layer 504.

In case the input data was training or validation data, class output selector 511 a provides the predicted class labels to a training controller 512. Else, class output selector 511a forwards the predicted class labels to a determiner 513.

In case the input data was training or validation data, attribute output selector 511b provides the predicted attribute labels to training controller 512. Else, attribute output selector 511b forwards the predicted attribute labels to determiner 513. Alternatively, in case the input data was training or validation data, attribute output selector 511b provides the mapping between ground-truth class labels and ground-truth attribute labels to training controller 512. Else, attribute output selector 511b forwards the mapping between ground-truth class labels and ground-truth attribute labels to determiner 513.

Training controller 512 receives both ground-truth class and attribute labels from selector 510 and compares them to the predicted class and attribute labels received from selectors 511a and 511b.

The neural network 501 is trained with both classification and attribute labels, i.e. with the goal of maximizing the accuracy of predicting both the correct class and the correct associated attribute labels. The training controller may be configured to penalize the neural network 501 when it outputs a correct class prediction having wrong attribute labels predictions associated with it.

Table 1 shows examples of predictions of a neural network system with two possible class labels {pedestrian, vehicle} and six possible attribute labels {legs, arms, head, wheels, windows, lights}.

Table 1

| Images # | Class label | Attribute labels | | | | | |
|---|---|---|---|---|---|---|---|
| | pedestrian or vehicle | legs | arms | head | wheels | windows | lights |
| 1 | pedestrian | ✓ | ✓ | ✓ | ✕ | ✕ | ✕ |
| 2 | vehicle | ✕ | ✕ | ✕ | ✓ | ✓ | ✓ |
| 3 | pedestrian | ✕ | ✕ | ✕ | ✕ | ✓ | ✓ |

Predictions for images #1 and #2 can be accepted as correct since the predicted class labels match with the predicted attribute labels. However, the prediction for image #3 is problematic, and may need to be penalized in the further training, since the predicted attribute labels do not match the class label. The predicted class label is pedestrian, but the predicted attribute labels are windows and lights.

The predicted attribute labels therefore provide further information as to why an image has been classified as belonging to a certain class, or certain classes. Furthermore, the predicted attribute labels, when they are consistent with the predicted class label, increase confidence in the correctness of the predicted class labels.

To train the neural network 501, training controller 512 may for example use the following training methodology:

In addition to the image

$$x \in \mathcal{X} = \mathbb{R}^d, \;$$

and class labels

$$y \in \mathcal{Y} = \{1, 2, \ldots, K\},$$

used in the training methodology for arrangement 400, a vector $a \in \mathcal{A} = \{0,1\}^A$, where A is the total number of attribute labels for all of the K classes combined, is provided. Since the mapping (association) between the classifications labels and the attribute labels is known, then for a given instance $x$ with class label $y$, the attribute label vector $a$ is a one hot encoded vector where only the elements corresponding to the attribute labels associated to the particular class label $y$ are set to 1.

For example, if the entire set of attribute labels is {legs, arms, head, wheels, windows, lights}, then for the classification label {vehicle}, the attribute label vector is given by $a = [0,0,0,1,1,1]$, and for the classification label {pedestrian}, the attribute label vector is given by $a = [1,1,1,0,0,0]$.

The learning task for the attribute labels can be considered as obtaining a function $F_{att}(x)$, in addition to obtaining the function $F_{clf}(x)$ in Equation (1), that predicts the ground-truth attribute labels. This function can be expressed as follows:

$$F_{att}(x) = f_{att}(f_L(f_{L-1}(\ldots f_1(x)))), \tag{2}$$

wherein the output of $f_{att}$ is an $A$-dimensional vector consisting of probabilities, each of which is obtained through a sigmoid function.

The neural network parameters are adjusted (in addition to the adjustment induced by the discrepancy between the ground-truth and predicted class labels) based on a minimization of the binary cross-entropy loss function $\mathcal{L}_{att}(F_{att}(x), a)$. Again, notice that both $F_{att}(x)$ and $a$ are A-dimensional vectors. The classification problem for the attributes corresponds to a number A of binary classification problems, that is, the loss $\mathcal{L}_{att}$ is a sum of A different binary cross entropy loss functions (one for each attribute). Since each part of the sum corresponds to predicting the presence/absence of a single attribute (which is a binary signal), one uses a binary (instead of a categorical) cross-entropy loss function. A predicted attribute label vector $\hat{a} = [\hat{a}_1, \ldots, \hat{a}_A]$ can be obtained with $\hat{a}_i = 1$ if $F_{att}(x)_i > 0.5$, else $\hat{a}_i = 0$.

It should be noted that the difference between Equation (1) and Equation (2) is only the last layer, i.e. the hidden representation for both the class and attributes parts are the same. However, it is possible to attach the functions $f_{att}$ and $f_{clf}$ to different hidden layers.

The overall optimization problem to predict both classification and attribute labels is based on the minimization of the following function:

$$\mathcal{L} = \lambda \mathcal{L}_{clf}(F_{clf}(x), y) + (1 - \lambda)\mathcal{L}_{att}(F_{att}(x), a) \tag{3}$$

where $\lambda$ is a parameter between 0 and 1, which denotes the tradeoff between the accuracy of predicting the correct class labels and the accuracy of predicting the correct attribute labels.

Afterwards, the validation dataset 506 is selected, and in case the difference between ground-truth and predicted labels is also sufficiently small, e.g. smaller than a predetermined threshold, for the labeled data from the validation dataset, the training of the neural network 501 can be regarded as completed. The neural network 501 can then be used as an image (or object) classifier.

Having trained the neural network 501 with class and attribute labels associated to them, additional information and explanations to better understand the classification will be available when the neural network is used as an image (or object) classifier. Since these explanations are pre-determined by the choice of the attribute labels, it is possible to incorporate, by design, specific and wanted information (explanations) into the image classifying system, as opposed to finding possible explanations for the classification in a post-hoc manner. This improves the trust in the classification, and may be highly desirable, e.g. in case sensitive or critical data is processed.

Training with attribute labels may cause the model to learn hidden representations in a more structured manner. For example, the classes {car} and {bus} may have several common features and attributes such as e.g. {(has) wheels, (has) lights, (is) vehicle}. Thus, car and bus will likely be close in the feature space. Vehicle will therefore likely also be closer in the feature space to a truck than to an animal. This implicit structure induced by the attribute labels may help in making the neural network less likely to suffer from overfitting.

Furthermore, the use of attributes labels may help render arrangement 500 more robust against adversarial perturbations. For example, while an adversarial perturbation might change the classification label of a given instance, this change may not result in a corresponding change of the attribute labels, or may result in a change that is not consistent with the attributes of the new class. Any of the two scenarios might result in a case where the predicted (adversarial) class label is inconsistent with the predicted attributes. Since such predictions may be rejected (or marked as unreliable), this may lead to the rejection of the adversarial perturbation. Changing (several) attribute labels in addition to the classification label might prove to be a much harder task for an adversary.

For images coming from image source 509 and stored in image storage 508, determiner 513 receives the predicted class labels from class output selector 511 a and the predicted attribute labels from attribute output selector 511b. Determiner 513 further receives the mapping between ground-truth class labels and ground-truth attribute labels from either attribute output selector 511b, selector 509 or/and from a storage (not shown in Figure 5). The determiner 513 then determines for an image (or object) if the predicted attribute label vector corresponds to the attribute label vector associated to the class the image (or object) has been classified into by neural network 501.

The class predictions, the results of the determination by determiner 513, and possibly (optionally) also the predicted attribute labels, are then stored in a storage 514, where they may be used for further processing.

Storage 514 may for example supply the class predictions and the results of the determination to a controller 515, such as e.g. controller 102 illustrated in Figure 1 or controller 204 illustrated in Figure 2.

Controller 515 may perform control based on the results of the determination by determiner 513. For example, controller 515 may determine, based on the result of the determination, e.g. the predicted attribute labels did not match the expected attribute labels for the class, or the predicted labels only matched the expected attribute labels for the class to a certain degree, e.g. matched to 30%, to 40%, to 50% or to 60%, that a classification by the neural network of a part from an assembly line, such as e.g. the one illustrated in Figure 2, is not reliable and should be discarded.

For example, controller 515 may determine, based on the result of the determination, e.g. that the predicted attribute labels did not match the expected attribute labels, but that the predicted attribute labels matched the expected attribute labels to a higher degree than a predetermined threshold, e.g. that the predicted attribute labels matched the expected attribute labels to over 70%, to over 80%, to over 90%, to over 95% or to over 99%, that a classification by the neural network of a part from an assembly line, such as e.g. the one illustrated in Figure 2, is reliable and perform control accordingly.

On the other hand, if the predicted attribute labels match the expected attribute labels for the class, the classification by the neural network is considered reliable and can be accepted. For example, if the neural network classifies a part of an assembly line, such as e.g. the one illustrated in Figure 2, as defective and the predicted attribute labels match the expected attribute labels for this classification, the controller 515 may control an actuator (not shown in Figure 5) to remove the defective part from the assembly line.

In the context of object detection in an autonomous driving scenario, such as the one illustrated in Figure 1, in case the predicted attribute labels do not match the expected attribute labels for the class of a detected object, e.g. the detected object has been classified as {vehicle}, but is missing the attribute label {wheels}, the classification by the neural network may be marked as unreliable (possibly requiring later analysis), but not discarded, i.e. controller 515 may still control an actuator to adjust the vehicle's speed, e.g. to actuate the brakes of the vehicle.

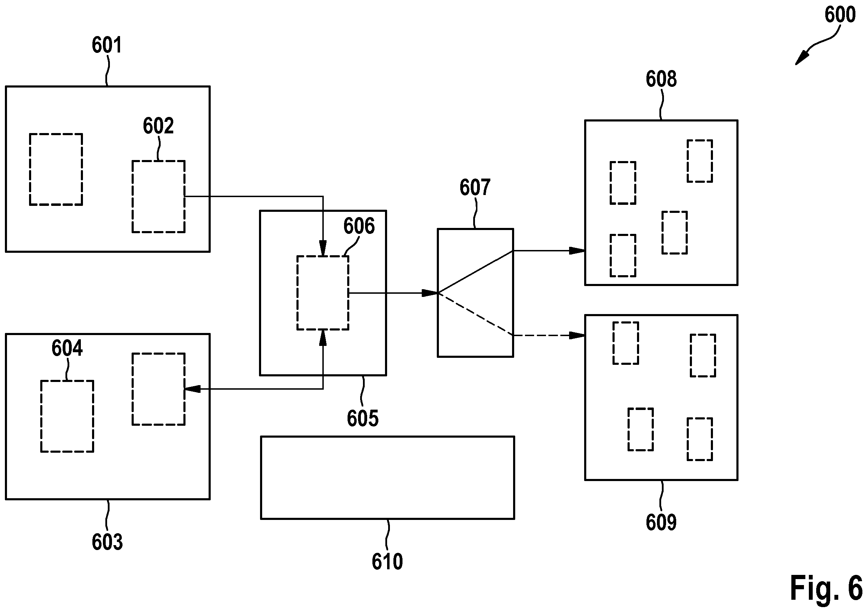

Figure 6 shows an example 600 of how images may be labeled with both class and attribute labels in order to become labeled data. Alternatively, the images may be labeled with a class label and an association (mapping) between the class label and attribute labels. This labeled data can then be used to train and/or validate a neural network, e.g. neural network 501.

Database 601 contains items 602 representing instances of images having an indication of their respective classes, i.e. which are provided with a ground-truth class label. Database 601 can for example be an open database, e.g. the MNIST open database, which contains a dataset of handwritten digits classified in 10 classes (one class for each digit), with a set of 60,000 examples for training and 10,000 examples for testing. There are many more such open datasets, containing images that are provided with classification labels, e.g. ImageNet, Fashion-MNIST, MS-COCO, the Open Images Dataset or the Cityscapes dataset.

Knowledge base 603 contains list of attributes 604, which are associated to respective classes. For example, for the class {stop sign}, knowledge base 603 may have a list of attributes 604 such as {hexagonal shape, red background, white lettering}. Knowledge base 603 may for example be an existing ontology such as FreeBase or YAGO. Knowledge base 603 may also contain (or could be constructed by compiling) attribute lists obtained via a (human) domain expert's annotations.

It has to be noted that the selection of the attribute labels influences the understanding of the classification, and therefore also the trustworthiness of the classification performed by the neural network. For example, the attribute labels may be chosen according to the particular type of objects or the purpose of the classification.

In general, bringing external knowledge to an image classifying system, e.g. from a knowledge base such as knowledge base 603 will help improve the quality of the training, and may make the system less likely to suffer from overfitting.

Combiner 605 receives items 602 from database 601, and requests knowledge base 603 to provide attribute lists for each of the classes. The combiner 605 then combines the received information to generate items 606 representing instances of images with a class label and attribute labels associated to the class label, or alternatively with a class label and an association between the class label and attribute labels.

In case no attribute list (or an empty list) was received from knowledge base 603 for a class, the combiner 605 may obtain an attribute list via another source, e.g. via human annotations.

A selector 607 can be provided to select which items 606 are provided to a storage 608 to form a training (and/or validation) dataset such as training dataset 505 (and/or validation dataset 506), and which items 606 are provided to a storage 609 to form a test dataset such as test dataset 507.

A controller 610 may be provided to control the operation of database 601, knowledge base 603, combiner 605 and selector 607 to generate a training (and/or validation) dataset and a test dataset.

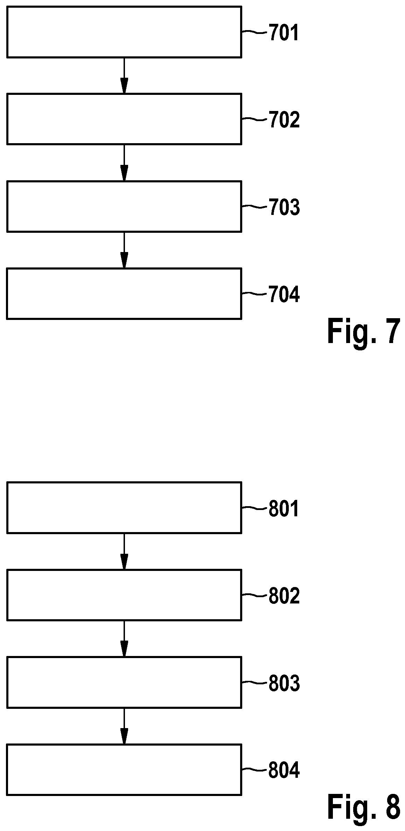

In summary, according to various embodiments, methods as illustrated in figures 7 and 8 are provided.

Figure 7 shows a flow diagram 700 illustrating a method for classifying input sensor data using a neural network according to an embodiment.

In 701, for each object class of a plurality of object classes, one or more attributes associated with the object class, wherein each attribute describes a feature of at least one object class of the plurality of object classes, are stored.

In 702, for input sensor data, an object class prediction for an object class in the input sensor data together with one or more attribute predictions is determined using a neural network.

In 703, whether or not the one or more attribute predictions correspond to the one or more attributes associated with the predicted object class is determined.

In 704, the further processing of the object class prediction is controlled based on whether or not the one or more attribute predictions correspond to the one or more attributes associated with the predicted object class.

In particular, different actions may be taken according to the result of the determination. Alternatively, it may also be possible that a class prediction be accepted or discarded according to the result of the determination.

According to various embodiments, in other words, objects in the input sensor data (e.g. input image data) are provided with an object class (label) and with one or more attributes (labels) associated to the object class, and which are stored for a later comparison. The attributes describe certain features of the object classes, e.g. features that are considered relevant (important) for the object class. The neural network is then provided with input sensor data, and outputs predictions for the object class and for the attributes. Afterwards, a determination whether or not the one or more attribute predictions match the one or more stored attributes associated with the predicted object class is made, i.e. it is determined if the attribute predictions match what is expected for the class an object has been classified as belonging to. The further processing of the object class prediction is controlled based on the result of this determination, e.g. the object class prediction may be indicated as unreliable if the attributes predictions do not match the stored attributes. The use of attributes (labels) therefore helps in explaining why the neural network has classified an object as belonging to a specific class, and in case the predicted attributes correspond to the stored attributes for the object class, increases the trust users have in the classification.

The neural network used according to figure 7 may for example be trained according to the method illustrated in figure 8.

Figure 8 shows a flow diagram 800 illustrating a method of training a neural network according to an embodiment.

In 801, training sensor data set units of a training dataset, each with a ground-truth object class label and with one or more ground-truth attribute labels, wherein each object class label is associated with at least one of the attribute labels, and wherein an attribute specified by an attribute label describes a feature of the object class specified by the object class label associated with the attribute label, are provided to the neural network.

In 802, for each training sensor data set unit of the training dataset, an object class prediction and one or more attribute predictions are predicted (output) by the neural network.

In 803, the ground-truth object class label and the one or more ground-truth attribute labels for the training sensor data set unit of the training dataset are compared to the object class prediction and one or more attribute predictions.

In 804, based on the discrepancy between the object class prediction and the ground-truth object class label jointly with the discrepancy between the one or more attribute predictions and the one or more ground-truth attribute labels, the neural network is adjusted.

According to various embodiments, in other words, the neural network receives training sensor data set units (objects) from the training dataset, which are labeled with a ground-truth object class label and with one or more associated ground-truth attribute labels, whereby an attribute describes a feature of an object class, e.g. a feature that is considered relevant (important) for the object class. The neural network then outputs for each object a prediction for the class and a prediction for the one or more attributes. The class and attribute predictions are jointly, for example substantially simultaneously, i.e. in the same iteration, compared to the ground-truth class and attribute labels, and based on the discrepancy between them, the neural network is adjusted, e.g. the weights of the nodes of the neural network are adjusted. That the discrepancy between the class and attribute predictions are jointly adjusted (reduced) can be understood as meaning that the loss function used during the training comprises terms for both the class and for the attributes, i.e. depends on both the discrepancy between the predicted object class and the ground-truth object class label and the discrepancy between the predicted attributes and the ground-truth attribute labels. The neural network is trained until the difference between the predictions and the ground-truth labels has been sufficiently reduced, e.g. until the difference between the predictions and the ground-truth labels is below a predetermined threshold.

The methods of figures 7 and 8 may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

The approaches of figures 7 and 8 may be used for a neural network receiving sensor signals from any sensor, i.e. operating on any kind of input sensor data such as video, radar, LiDAR, ultrasonic and motion.

It should in particular be noted that the input data are not limited to images but can also be applied to any image-like data (e.g. data structured in the form of one or more two-dimensional or also higher-dimensional arrays) such as spectrograms of sounds, radar spectra, ultrasound images, etc. Moreover, raw 1D (e.g. audio) or 3D data (video, or RGBD (Red Green Blue Depth) data) can also be used as input.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A method for classifying input sensor data using a neural network, comprising:

   storing for each object class of a plurality of object classes one or more attributes associated with the object class, wherein each attribute describes a feature of at least one object class of the plurality of object classes;
   determining, for input sensor data , an object class prediction for an object class in the input sensor data together with one or more attribute predictions using the neural network;
   determining whether or not the one or more attribute predictions correspond to the one or more attributes associated with the predicted object class; and
   controlling further processing of the object class prediction based on whether or not the one or more attribute predictions correspond to the one or more attributes associated with the predicted object class.

2. The method of claim 1, wherein controlling the further processing includes triggering the storing of an indication of whether or not the one or more attribute predictions correspond to the one or more attributes associated with the object class .

3.  The method of claim 2, wherein controlling the further processing includes storing at least one of the attribute predictions, the object class prediction and the input sensor data.

4.  The method of any of claims 1 to 3, wherein controlling the further processing includes accepting or discarding the object class prediction based on whether or not the one or more attribute predictions correspond to the one or more attributes associated with the object class.

5.  The method of any one of claims 1 to 4, wherein controlling the further processing includes operating an actuator in a device based on whether or not the one or more attribute predictions correspond to the one or more attributes associated with the predicted object class.

6.  The method of any one of claims 1 to 5, wherein determining whether the one or more attribute predictions correspond to the one or more attributes associated with the predicted object class comprises determining the stored attributes associated with the predicted object class and comparing the determined stored attributes with the attribute predictions.

7.  The method according to any one of claims 1 to 6, wherein the input sensor data is input image data.

8.  The method of any one of claims 1 to 7, wherein each attribute describes a peculiarity that objects from the object class have.

9.  The method of any one of claims 1 to 8, wherein each attribute describes a characteristic property that objects from the object class have.

10. The method of any one of claims 1 to 9, wherein each object class has a unique combination of attributes associated to it.

11. The method of any one of claims 1 to 10, wherein the neural network is a deep feed forward neural network and/or a convolutional neural network and/or a recurrent neural network and/or an attention-based neural network.

12. A classification system configured to perform the method of any one of claims 1 to 11.

13. A method of training a neural network, comprising:

     providing training sensor data set units of a training dataset each with a ground-truth object class label and with one or more ground-truth attribute labels, wherein each object class label is associated with at least one of the attribute labels, and wherein an attribute specified by an attribute label describes a feature of the object class specified by the object class label associated with the attribute label;
     training the neural network by
     predicting, for each training sensor data set unit of the training dataset, an object class prediction and one or more attribute predictions;
     comparing the ground-truth object class label and the one or more ground-truth attribute labels for the training sensor data set unit of the training dataset to the object class prediction and one or more attribute predictions; and
     adjusting the neural network based on the discrepancy between the object class prediction and the ground-truth object class jointly with the discrepancy between the one or more attribute predictions and the one or more ground-truth attribute labels.

14. Computer program comprising instructions which, when executed by a computer, cause the computer to carry out a method according to any one of the claims 1 to 11, 13.

15. Computer-readable data carrier comprising the computer program according to claim 14.


**Amended claims in accordance with Rule 137(2) EPC.**

1.  A method performed by one or more processors executing a computer program for classifying input sensor data using a neural network, comprising:

storing for each object class of a plurality of object classes one or more attributes associated with the object class, wherein each attribute describes a feature of at least one object class of the plurality of object classes and wherein each object class has a unique combination of attributes associated to it;

determining, for input sensor data, an object class prediction for an object class in the input sensor data together with one or more attribute predictions using the neural network;

determining whether or not the one or more attribute predictions correspond to the one or more stored attributes associated with the predicted object class by determining the stored attributes associated with the predicted object class and comparing the determined stored attributes with the attribute predictions; and

operating an actuator in a device based on whether or not the one or more attribute predictions correspond to the one or more attributes associated with the predicted object class.

2. The method of claim 1, wherein controlling the further processing includes triggering the storing of an indication of whether or not the one or more attribute predictions correspond to the one or more attributes associated with the object class.

3. The method of claim 2, wherein controlling the further processing includes storing at least one of the attribute predictions, the object class prediction and the input sensor data.

4. The method of any of claims 1 to 3, wherein controlling the further processing includes accepting or discarding the object class prediction based on whether or not the one or more attribute predictions correspond to the one or more attributes associated with the object class.

5. The method according to any one of claims 1 to 4, wherein the input sensor data is input image data.

6. The method of any one of claims 1 to 5, wherein each attribute describes a peculiarity that objects from the object class have.

7. The method of any one of claims 1 to 6, wherein each attribute describes a characteristic property that objects from the object class have.

8. The method of any one of claims 1 to 7, wherein the neural network is a deep feed forward neural network and/or a convolutional neural network and/or a recurrent neural network and/or an attention-based neural network.

9. A classification system, including one or more processors configured to perform the method of any one of claims 1 to 8.

10. The method of any one of claims 1 to 8 further comprising:

providing training sensor data set units of a training dataset each with a ground truth object class label and with one or more ground truth attribute labels, wherein

each object class label is associated with at least one of the attribute labels, and

wherein an attribute specified by an attribute label describes a feature of the object class specified by the object class label associated with the attribute label and

wherein each object class label has a unique combination of attributes labels associated to it;

training the neural network by

predicting, for each training sensor data set unit of the training dataset, an object class prediction and one or more attribute predictions;

comparing the ground-truth object class label and the one or more ground-truth attribute labels for the training sensor data set unit of the training dataset to the object class prediction and one or more attribute predictions; and

adjusting the neural network based on the discrepancy between the object class prediction and the ground-truth object class jointly with the discrepancy between the one or more attribute predictions and the one or more ground-truth attribute labels.

11. Computer program comprising instructions which, when executed by a computer, cause the computer to carry out a method according to any one of the claims 1 to 8,10.

12. Computer-readable data carrier comprising the computer program according to claim 11.

Fig. 1

Fig. 2

Fig. 3

Fig. 4

Fig. 5

EP 3 779 799 A1

Fig. 6

Fig. 7

Fig. 8

**EP 3 779 799 A1**

Europäisches
Patentamt

European
Patent Office

Office européen
des brevets

# EUROPEAN SEARCH REPORT

Application Number

EP 19 19 1652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/121748 A1 (KWAK YOUNGJUN [KR] ET AL) 3 May 2018 (2018-05-03) * paragraph [0002] - paragraph [0023] * * paragraph [0041] - paragraph [0118]; figures 1-12 * | 1-15 | INV. G06N3/04 G06N3/08 G06N5/04 ADD. G06N5/02 |
| X | US 2019/205643 A1 (LIU DONG [US] ET AL) 4 July 2019 (2019-07-04) * abstract; claims 1-21; figures 1-4, 6 * * paragraph [0006] - paragraph [0064] * | 1-15 | |
| A | US 2017/364798 A1 (KARLINSKY LEONID [IL] ET AL) 21 December 2017 (2017-12-21) * the whole document * | 1-15 | |
| A,D | JINKYU KIM ET AL: "Textual Explanations for Self-Driving Vehicles", ARXIV.ORG, CORNELL UNIVERSITY LIBRARY, 201 OLIN LIBRARY CORNELL UNIVERSITY ITHACA, NY 14853, 30 July 2018 (2018-07-30), XP081252598, * the whole document * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 18 February 2020 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 19 19 1652

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2020

| Patent document cited in search report | | Publication date | Patent family member(s) | | Publication date |
|---|---|---|---|---|---|
| US 2018121748 | A1 | 03-05-2018 | KR 20180048058 A<br>US 2018121748 A1 | | 10-05-2018<br>03-05-2018 |
| US 2019205643 | A1 | 04-07-2019 | NONE | | |
| US 2017364798 | A1 | 21-12-2017 | KR 20170074812 A<br>TW 201732690 A<br>US 2017177997 A1<br>US 2017357895 A1<br>US 2017364798 A1 | | 30-06-2017<br>16-09-2017<br>22-06-2017<br>14-12-2017<br>21-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RIBEIRO et al.** Why Should I Trust You?: Explaining the Predictions of Any Classifier. *KDD,* 2016
- Deep Inside Convolutional Networks: Visualising Image Classification and Saliency Maps. *ICLR,* 2014
- **KIM et al.** Textual Explanations for Self-Driving Vehicles. *ECCV,* 2018
- *Textual Explanations for Self-Driving Vehicles*
- **GAL ; GHAHRAMANI.** Dropout as a Bayesian Approximation: Representing Model Uncertainty in Deep Learning. *ICML,* 2016